(19) Europäisches Patentamt
European Patent Office
Office européen des brevets

(11) **EP 3 211 348 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(51) Int Cl.:
***F24F 13/20*** *(2006.01)*     ***F25D 23/06*** *(2006.01)*
***F24F 13/02*** *(2006.01)*

(21) Anmeldenummer: **17155556.8**

(22) Anmeldetag: **10.02.2017**

(54) **WÄRMEGEDÄMMTES GEHÄUSE FÜR EIN KLIMAGERÄT**

HEAT INSULATED HOUSING FOR AN AIR CONDITIONING UNIT

BOÎTIER ISOLÉ THERMIQUEMENT POUR UN APPAREIL DE CLIMATISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.02.2016 DE 202016101045 U**

(43) Veröffentlichungstag der Anmeldung:
**30.08.2017 Patentblatt 2017/35**

(73) Patentinhaber:
• **REHAU AG + Co**
**95111 Rehau (DE)**
• **A.P.S. Arosio S.p.A.**
**20060 Gessate (MI) (IT)**

(72) Erfinder:
• **Al-Sheyyab, Ahmad**
**95111 Rehau (DE)**
• **Scholze-Starke, Jörg**
**95111 Rehau (DE)**
• **Schulz, Hartmut**
**95111 Rehau (DE)**
• **Arosio, Luca**
**20060 Gessate (MI) (IT)**
• **Orsini, Alberto**
**20060 Gessate (MI) (IT)**

(56) Entgegenhaltungen:
EP-A1- 2 803 805     DE-A1- 10 033 389
DE-A1-102009 051 058     DE-U1-202009 014 319

**Beschreibung**

Die Erfindung betrifft ein wärmegedämmtes, insbesondere quaderförmiges Gehäuse für ein Klimagerät mit den Merkmalen des Oberbegriffs des Patentanspruchs 1.

Bei dem Klimagerät kann es sich insbesondere um ein sogenanntes Zentralklimagerät handeln, mit dem ein zentrales Klima-Management in Gebäuden möglich ist. Üblicherweise ist in dem Klimagerät zwecks Bereitstellung von gekühlter Luft die Temperatur deutlich niedriger als in der unmittelbaren Umgebung des Zentralklimagerätes. Vor diesem Hintergrund ist eine gute Wärmedämmung des Gehäuses von besonderer Bedeutung hinsichtlich des Energieverbrauchs.

Um die erforderliche mechanische Stabilität und Robustheit zu gewährleisten, sind die im Stand der Technik bekannten Gehäuse derartiger Klimageräte üblicherweise in Stahl bzw. Aluminium ausgeführt. Während die Gehäusewände in der Regel aus zwei metallischen Wandungen bestehen, zwischen denen Wärmedämmmaterial eingebracht ist und somit insgesamt eine gute Wärmedämmung im Bereich der Wandungen gewährleistet ist, werden die Rahmenprofile als Strangprofile aus Stahl bzw. Aluminium ausgeführt, welche mit thermischen Trennstegen versehen sein können. Insgesamt ist jedoch im Stand der Technik die Wärmedämmung des Gehäuserahmens nicht optimal.

Aus der DE 20 2009 014 319 U1 ist ein gattungsgemäßes Gehäuse bekannt. Die EP 2 803 805 A1 zeigt einen Paneelrahmen für ein Sektionaltorblatt, der aus armierten KunststoffProfilen zusammengesetzt ist. Die DE 100 33 389 A1 offenbart mit Armierungselementen versehene Fensterprofile.

Vor dem beschriebenen Hintergrund liegt der Erfindung die Aufgabe zugrunde, ein wärmegedämmtes Gehäuse der eingangs beschriebenen Art bereitzustellen, welches verbesserte Wärmedämmeigenschaften aufweist.

Erfindungsgemäß wird die Aufgabe durch die Merkmale des Patentanspruchs 1 gelöst. Erfindungsgemäß wurde erkannt, dass durch den Einsatz von Kunststoffmaterial im Gehäuserahmen eine überraschend große Verbesserung der gesamten Wärmedämmeigenschaften des Gehäuses erzielt werden kann. Um hierbei die erforderliche mechanische Belastbarkeit des Gehäuserahmens zu gewährleisten, ist mindestens ein Kunststoff-Extrusionsprofil erfindungsgemäß mit mehreren Armierungseinlagen armiert. Bei dem Kunststoff-Material, aus dem das Extrusionsprofil hergestellt wird, kann es sich z.B. um Polypropylen oder PVC handeln.

Die Armierungseinlagen können bandförmig ausgebildet sein. Bandförmig meint hierbei, dass im Querschnitt gesehen die Breite des Armierungselementes deutlich größer als dessen Dicke ist, beispielsweise mehr als doppelt oder mehr als dreimal so groß. Die Armierungseinlagen bestehen aus Metall (z.B. Stahl) bzw. einem Faser-Matrix-Halbzeug mit einer Kunststoff-Matrix, in die, vorzugsweise endlose, Verstärkungsfasern integriert sind, bestehen. Erfindungsgemäß ist das Faser-Matrix-Halbzeug als Organoblech ausgebildet. Organobleche sind vorgefertigte, beispielsweise als - insbesondere gerollte - Bandware verfügbare Halbzeuge und bestehen aus einem die Verstärkungsfasern enthaltenden Fasergewebe oder Fasergelege, das in eine thermoplastische Kunststoff-Matrix eingebettet ist. Als Fasern kommen vorzugsweise Glas-, Aramid- und / oder Carbonfasern zum Einsatz. Zweckmäßigerweise verlaufen die Verstärkungsfasern allesamt in Extrusionsrichtung. Das Faser-Matrix-Halbzeug hat allgemein den Vorteil, dass es einerseits zu einer deutlichen Erhöhung der mechanischen Belastbarkeit des Kunststoff-Extrusionsprofils beiträgt und dabei andererseits selbst ebenfalls gute Wärmedämmeigenschaften besitzt. Im Rahmen der Erfindung liegt es daher insbesondere, dass mindestens ein im Innenbereich des Rahmenpfostens angeordnetes bandförmiges Faser-Matrix-Halbzeug vorgesehen ist. In diesem Fall ist die gute Wärmedämmung des Armierungsmaterials von besonderer Bedeutung, da es andernfalls als Wärmebrücke fungieren würde.

Im Rahmen der Erfindung liegt es weiterhin, dass mindestens eine in unmittelbarer Nähe und parallel zur Außenoberfläche des Gehäuses angeordnete Metall-Armierungseinlage vorgesehen ist. Die Metall-Armierungseinlage ist zweckmäßigerweise wiederum bandförmig ausgebildet und zeichnet sich dadurch aus, dass sie gegenüber dem Faser-Matrix-Halbzeug in der Regel kostengünstiger ist und eine höhere Biegesteifigkeit besitzt. Da diese Armierungseinlage im Falle der vorbeschriebenen vorzugsweisen Anordnung quer zur Wärmestromrichtung ausgerichtet ist, verläuft entlang der Metallarmierung kein nennenswerter Temperaturgradient, so dass die guten wärmeleitenden Eigenschaften der Metalleinlage in diesem Fall keine relevante Verschlechterung der Wärmedämmeigenschaften des gesamten Gehäuses zur Folge haben. In einem solchen Fall kann also die Metall-Armierungseinlage genutzt werden, ohne dass sich dies nachteilig auf die Wärmedämmung des Gehäuses auswirkt. Erfindungsgemäß weist das mindestens eine Kunststoff-Extrusionsprofil mehrere Armierungseinlagen auf. Der Gehäuserahmen kann auch mehrere Kunststoff-Extrusionsprofile aufweisen, die jeweils mehrere Armierungslagen besitzen. Erfindungsgemäß ist mindestens ein Kunststoff-Extrusionsprofil sowohl mit mindestens einem als Organoblech ausgebildeten Faser-Matrix-Halbzeug als auch mindestens einer Metall-Armierungseinlage armiert. Auch kann der Kunststoff-Grundkörper mindestens eines Kunststoff-Extrusionsprofils (z.B. mehrerer Kunststoff-Extrusionsprofile) mindestens eine zusätzliche Funktion ausweisen, beispielsweise eine Clipsfunktion für eine Clip-Verbindung und/oder einen federnden Schenkel, z.B. um die Einfassung einer Wandung einer Gehäusewand zu erleichtern.

Erfindungsgemäß weist das armierte Kunststoff-Extrusionsprofil einen Wärmeausdehnungskoeffi-

zienten

$$\alpha = \Delta L \, / \, (L \cdot \Delta T)$$

von $\alpha_P = 15 \div 35 \cdot 10^{-6}$ / K, insbes. $\alpha_P = 20 \div 30 \cdot 10^{-6}$ / K auf (Werte jeweils gemessen bei 20°C). $\Delta L$ bezeichnet hierbei die Längenänderung des Längenelementes L und $\Delta T$ die Temperaturänderung, welche die Längenänderung $\Delta L$ hervorruft. Der Wärmeausdehnungskoeffizient des armierten Kunststoff-Extrusionsprofils wird einerseits beeinflusst durch das Kunststoff-Grundmaterial, welches die Kunststoff-Matrix des Extrusionsprofils bildet, und andererseits durch das Material der Armierungseinlage. So hat z.B. Stahl einen Wärmeausdehnungskoeffizienten von $\alpha_{St} \approx 12 \cdot 10^{-6}$ / K und Kunststoff (je nach Material) einen von $\alpha_{Ku} \approx 80 \cdot 10^{-6}$ / K. Sofern man nun z.B. insgesamt für das Kunststoff-Extrusionsprofil einen Wärmeausdehnungskoeffizienten erreichen will, welcher dem vom Aluminium ($\alpha_{Al} = 23{,}1 \cdot 10^{-6}$ / K) entspricht, muss dieses Profil unter Einsatz der Materialien Kunststoff sowie Metall und/oder Faser-Matrix-Halbzeug so gestaltet werden, dass sich der gewünschte Wärmeausdehnungskoeffizient im kombinierten Profil einstellt. Dies hat insgesamt den Vorteil, dass bei der erfindungsgemäßen Ausführung der Gehäusewände mit einer Innen- und / oder Außenwandung aus Aluminium der entsprechende Rahmenpfosten das selbe Wärmedehnverhalten besitzt wie die Wände. Hierdurch wird das Auftreten von mechanischen Spannungen aufgrund unterschiedlicher Wärmeausdehnungen vermieden.

Vorteilhaft bei der erfindungsgemäßen Lehre ist ferner die freie Farbgestaltung der Kunststoff-Extrusionsprofile, welche durch die Zumischung entsprechender Farbpigmente in das Kunststoff-Grundmaterial problemlos möglich ist. Zweckmäßigerweise ist ferner mindestens ein Kunststoff-Extrusionsprofil als Hohlkammerprofil ausgebildet, um die Wärmedämmeigenschaften weiter zu verbessern und dabei gleichzeitig Material einzusparen. Im Rahmen der Erfindung liegt es insbesondere, dass die einzelnen Rahmenpfosten jeweils aus mindestens zwei parallel nebeneinander angeordneten Kunststoff-Extrusionsprofilen zusammen gesetzt sind. Hierdurch können auch komplexe Rahmenpfosten-Geometrien problemlos realisiert werden. Zweckmäßigerweise greifen die Kunststoff-Extrusionsprofile hierbei passgenau ineinander.

Ein weiterer Vorteil der erfindungsgemäßen Lehre besteht darin, dass an die Kunststoff-Extrusionsprofile problemlos zusätzliche Komponenten anextrudiert werden können, beispielsweise mindestens ein elastisches Dichtungsprofil. Dies ist insbesondere von Bedeutung, wenn die einzelnen Rahmenpfosten - wie zuvor beschrieben - jeweils aus mehreren parallel nebeneinander angeordneten Kunststoff-Extrusionsprofilen zusammengesetzt sind, die zueinander abgedichtet werden müssen. Im Stand der Technik müssen hierzu in den Stahl- bzw. Aluminiumprofilen regelmäßig Nuten vorgesehen werden, in die separat herzustellende Dichtungslippen eingesetzt werden. Somit bietet die erfindungsgemäße Lehre auch fertigungstechnische Vorteile. Das Dichtungsprofil kann beispielsweise aus einem thermoplastischen Elastomer, einem weichgemachten PVC, einem Polyurethan oder einem reinen Elastomer bestehen.

Gegenstand der Erfindung ist auch ein Klimagerät mit einem erfindungsgemäßen Gehäuse gemäß Anspruch 10. Ein solches Klimagerät beinhaltet üblicherweise eine Kältemaschine, mittels der ein gekühlter Luftstrom bereitgestellt werden kann. Zweckmäßigerweise ist auch eine Einrichtung zur Abscheidung von bei der Abkühlung entstehender Flüssigkeit (Kondenswasser) vorgesehen.

Im Folgenden wird die Erfindung anhand einer lediglich ein Ausführungsbeispiel darstellenden Zeichnung ausführlich erläutert. Es zeigen schematisch:

Fig. 1: ein erfindungsgemäßes Gehäuse für ein Klimagerät;

Fig. 2: den Teilschnitt A-A in Fig. 1 durch einen erfindungsgemäßen Rahmenpfosten;

Fig. 2a: das in der Fig. 2 schwarz dargestellte Profil in einer vergrößerten Detaildarstellung;

Fig. 3: eine der Fig. 2 entsprechende Schnittdarstellung, jedoch mit anderer Schwärzung;

Fig. 3a: das in Fig. 3 geschwärzt dargestellte Profil in einer vergrößerten Detailansicht und

Fig.4 ein in den Fig. 2,2a,3,3a dargestelltes Faser-Matrix-Halbzeug in einer Einzeldarstellung

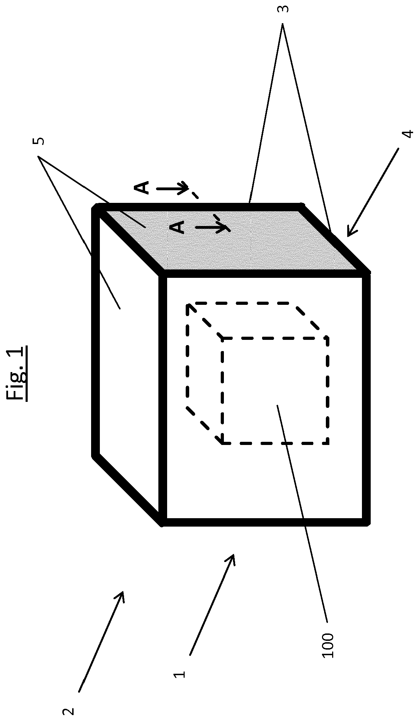

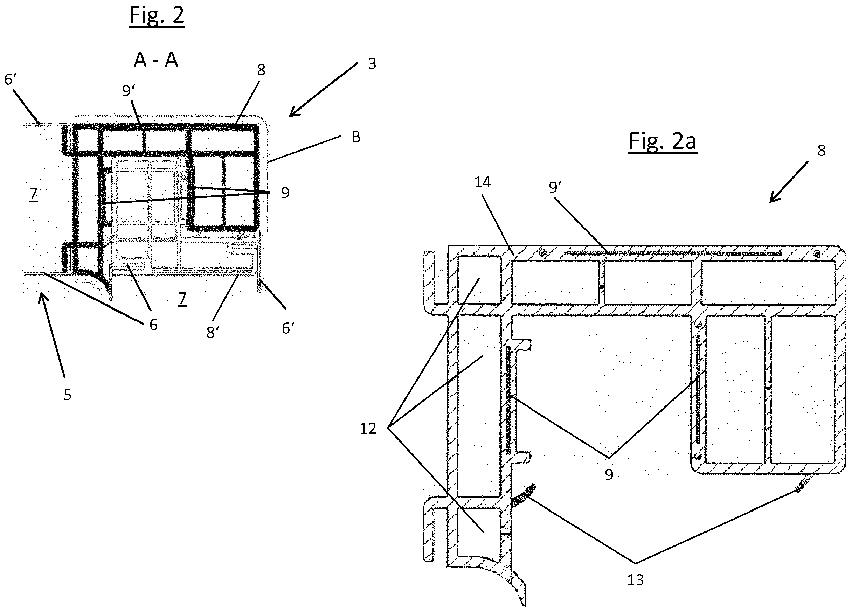

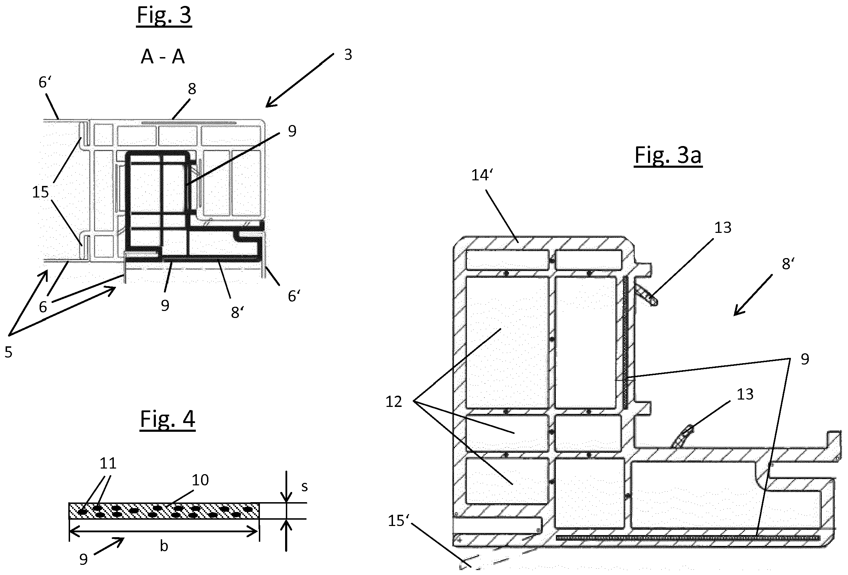

Die Fig. 1 zeigt ein wärmegedämmtes, quaderförmiges Gehäuse 1 für ein Zentralklimagerät 2. Dieses Zentralklimagerät 2 umfasst eine (durch gestrichelte Linien angedeutete) Kältemaschine 100 zur Erzeugung von gekühlter Luft sowie weitere Komponenten (nicht näher dargestellt). Das Klimagerät 2 weist mehrere Rahmenpfosten 3 auf, welche miteinander zu einem quaderförmigen Gehäuserahmen 4 verbunden sind. Es sind ferner wärmegedämmte Gehäusewände 5 vorgesehen, welche vom Gehäuserahmen 4 eingefasst sind. Wie die Figuren 2, 2a, 3 und 3a zeigen, weisen die Gehäusewände 5 weisen jeweils eine dünne Innenwandung 6 und Außenwandung 6' aus Aluminium auf, wobei sich zwischen diesen beiden Wandungen 6, 6' Isolationsmaterial 7 befindet. Die Rahmenpfosten 3 bestehen aus Kunststoff-Extrusionsprofilen 8, 8', wobei die Kunststoff-Extrusionsprofile 8, 8' zum Teil jeweils mehrere, vollumschließend einextrudierte Armierungseinlagen 9, 9' aufweisen (Fig. 2a, 3a). Zum Teil bestehen die Rahmenpfosten 3 auch aus (nicht im Detail dargestellten) unarmierten Kunststoff-Extrusionsprofilen. Die Armierungseinlagen 9, 9' sind bandförmig ausgebildet (Breite b > 2 · Dicke s) und bestehen entweder aus einer Stahl-Armierungseinlage 9' oder einem Faser-Matrix-Halbzeug 9 mit einer Kunststoff-Matrix 10, in die endlose Verstärkungsfasern 11 integriert sind. Dies wird anhand der Fig. 4 deutlich, welche ein solches Faser-Matrix-Halbzeug 9 im Querschnitt in einer Einzeldarstellung zeigt. Im Ausführungsbeispiel sind die Faser-Matrix-Halbzeuge 9 als Organobleche ausgebildet. Organobleche sind vorgefertigte, beispielsweise als - insbesondere gerollte - Bandware verfügbare Halbzeuge und bestehen aus einem die Verstärkungsfasern 11 enthaltenden Fasergewebe oder Fasergelege, das in die thermoplastische Kunststoff-Matrix 10 eingebettet ist. Als Verstärkungsfasern 11 kommen vorzugsweise Glas-, Aramid- und / oder Carbonfasern zum Einsatz. Im Ausführungsbeispiel sind die Verstärkungsfasern 11 allesamt in Bandrichtung ausgerichtet.

Anhand der Detaildarstellungen in den Figuren 2, 2a sowie 3, 3a ist erkennbar, dass die Organobleche 9 im Innenbereich des Rahmenpfostens 3 angeordnet sind. Den Wärmedämmeigenschaften der Organobleche 9 kommt hierdurch eine besondere Bedeutung zu, da sie bei guter Wärmeleitung als unerwünschte Wärmebrücken dienen würden. Die bandförmige Metall-Armierungseinlage 9' in Fig. 2, 2a ist hingegen in unmittelbarer Nähe und parallel zur Außenoberfläche B des Gehäuses 1 angeordnet, so dass im Querschnitt gesehen entlang der Metall-Armierungseinlage 9' nur ein geringer Temperatur-Gradient vorliegt und somit deren Wärmedämmeigenschaften von untergeordneter Bedeutung sind. Ferner weisen die beiden in den Figuren 2a und 3a dargestellten Kunststoff-Extrusionsprofile 8, 8' jeweils einen Wärmeausdehnungskoeffizienten von $\alpha_P \approx 23 \times 10^{-6}$ / K auf, um dem Wärmeausdehnungskoeffizienten der Innen- und Außenwandungen 6, 6' aus Aluminium zu entsprechen. Ferner ist erkennbar, dass die Kunststoff-Extrusionsprofile 8, 8' als Hohlkammerprofile mit jeweils mehreren Hohlkammern 12 ausgebildet sind.

Die Figuren 2 und 3 zeigen ferner, dass die Rahmenpfosten 3 jeweils aus zwei parallel nebeneinander angeordneten Kunststoff-Extrusionsprofilen 8, 8' zusammen gesetzt sind. Die Profile 8, 8' greifen hierbei passgenau ineinander und bilden gemeinsam den Gesamtquerschnitt des entsprechenden Rahmenpfostens 3. Um die beiden Kunststoff-Extrusionsprofile 8, 8' zueinander abzudichten, sind an beiden Profilen 8, 8' jeweils elastische Dichtungsprofile 13 anextrudiert. Diese Dichtungsprofile 13 wurden in einem einzigen Extrusionsverfahren gemeinsam mit dem jeweiligen, aus Kunststoff-Grundmaterial (z.B. PP oder PVC) bestehenden Kunststoff-Grundkörper 14, 14' durch eine entsprechende 2K-Extrusion hergestellt. Die Armierungseinlagen 9, 9' hingegen laufen bei der Extrusion als vorgefertigte, bandförmige Ware in das Extrusionswerkzeug ein und werden hierbei vom Kunststoff-Grundmaterial ummantelt. Hierbei ist es zweckmäßig, die Armierungseinlagen 9, 9' jeweils vorzuwärmen, bevor sie im Extrusionsprozess verarbeitet werden. Die Dichtungsprofile 13 bestehen im Ausführungsbeispiel jeweils aus einem thermoplastischen Elastomer. Eine vergleichende Betrachtung der Fig. 3 und 3a zeigt, dass die Kunststoff-Grundkörper 14, 14' jeweils mindestens einen Federschenkel 15, 15' aufweisen und hierdurch bereichsweise elastisch ausgebildet sind, um die Einfassung einer Wandung 6 zu erleichtern.

## Patentansprüche

1. Wärmegedämmtes, insbesondere quaderförmiges Gehäuse (1) für ein Klimagerät (2) mit

   - mehreren Rahmenpfosten (3), die miteinander zu einem Gehäuserahmen (4) verbunden sind, und
   - mehreren, vom Gehäuserahmen (4) eingefassten wärmegedämmten Gehäusewänden (5),
   - wobei die Rahmenpfosten (3) aus Kunststoff-Extrusionsprofilen (8, 8') bestehen und mindestens ein Kunststoff-Extrusionsprofil (8, 8') mehrere, vorzugsweise vollumschließend einextrudierte, Armierungseinlagen (9, 9') aufweist, und
   - wobei mindestens eine Armierungslage (9') aus Metall besteht,
   **dadurch gekennzeichnet,**
   - **dass** mindestens eine weitere Armierungseinlage (9) aus einem als Organoblech ausgebildeten Faser-Matrix-Halbzeug mit einer Kunststoff-Matrix (10), in die, vorzugsweise endlose, Verstärkungsfasern (11) integriert sind, besteht,
   - **dass** die Gehäusewände (5) eine Innen- und/oder Außenwandung (6, 6') aus Aluminium aufweisen und
   - **dass** das armierte Kunststoff-Extrusionsprofil (8, 8') einen Wärmeausdehnungskoeffizienten $\alpha_P = 15 \div 35 \cdot 10^{-6}$ / K aufweist.

2. Gehäuse (1) nach Anspruch 1, **dadurch gekennzeichnet, dass** die Verstärkungsfasern (11) allesamt in Extrusionsrichtung verlaufen.

3. Gehäuse (1) nach Anspruch 1 oder 2, **dadurch gekennzeichnet, dass** mindestens ein im Innenbereich des Rahmenpfostens (3) angeordnetes, bandförmiges Faser-Matrix-Halbzeug (9) vorgesehen ist.

4. Gehäuse (1) nach einem der Ansprüche 1 bis 3, **dadurch gekennzeichnet, dass** mindestens eine, vorzugsweise in unmittelbarer Nähe und parallel zur Außenoberfläche (B) des Gehäuses (1) angeordnete, Metall-Armierungseinlage (9') vorgesehen ist.

5. Gehäuse (1) nach einem der Ansprüche 1 bis 4, **dadurch gekennzeichnet, dass** das armierte Kunststoff-Extrusionsrofil (8, 8') einen Wärmeausdehnungskoeffizienten $\alpha_P = 20 \div 30 \cdot 10^{-6}$ / K aufweist.

6. Gehäuse (1) nach einem der Ansprüche 1 bis 5, **dadurch gekennzeichnet, dass** mindestens ein Kunststoff-Extrusionsprofil (8, 8') als Hohlkammerprofil ausgebildet ist.

7. Gehäuse (1) nach einem der Ansprüche 1 bis 6, **dadurch gekennzeichnet, dass** die Rahmenpfosten (3) jeweils aus mindestens zwei parallel nebeneinander angeordneten Kunststoff-Extrusionsprofilen (8, 8') zusammen gesetzt sind.

8. Gehäuse (1) nach einem der Ansprüche 1 bis 7, **dadurch gekennzeichnet, dass** an mindestens ein Kunststoff-Extrusionsprofil (8, 8') mindestens ein elastisches Dichtungsprofil (13) anextrudiert ist.

9. Gehäuse (1) nach Anspruch 8, **dadurch gekennzeichnet, dass** das Dichtungsprofil (13) aus einem thermoplastischen Elastomer, einem weichgemachten PVC, einem Polyurethan oder einem reinen Elastomer besteht.

10. Klimagerät (2) mit einem Gehäuse (1) nach einem der Ansprüche 1 bis 9.


**Claims**

1. Heat-insulated, in particular cuboid housing (1) for an air conditioning unit (2), comprising

   - a plurality of frame posts (3) which are interconnected to form a housing frame (4), and
   - a plurality of heat-insulated housing walls (5) that are surrounded by the housing frame (4),
   - wherein the frame posts (3) consist of plastics extrusion profiles (8, 8'), and at least one plastics extrusion profile (8, 8') comprises a plurality of reinforcement inserts (9, 9') that are preferably extruded in a fully enclosing manner, and
   - wherein at least one reinforcement layer (9') consists of metal,
   **characterised in that**
   - at least one further reinforcement insert (9) consists of a fibre-matrix semi-finished product that is formed as an organic sheet and comprises a plastics matrix (10) in which preferably endless reinforcing fibres (11) are integrated,
   - the housing walls (5) comprise internal and/or external walling (6, 6') made of aluminium, and
   - the reinforced plastics extrusion profile (8, 8') has a coefficient of thermal expansion $\alpha_P = 15 \div 35 \cdot 10^{-6}$ / K.

2. Housing (1) according to claim 1, **characterised in that** the reinforcing fibres (11) all extend in the extrusion direction.

3. Housing (1) according to either claim 1 or claim 2, **characterised in that** at least one strip-like fibre-matrix semi-finished product (9) is provided, which is arranged in the interior region of the frame post (3).

4. Housing (1) according to any of claims 1 to 3, **characterised in that** at least one metal reinforcement insert (9') is provided which is preferably arranged in the direct vicinity of and in parallel with the outer surface (B) of the housing (1).

5. Housing (1) according to any of claims 1 to 4, **characterised in that** the reinforced plastics extrusion profile (8, 8') has a coefficient of thermal expansion $\alpha_P = 20 \div 30 \cdot 10^{-6}$ / K.

6. Housing (1) according to any of claims 1 to 5, **characterised in that** at least one plastics extrusion profile (8, 8') is formed as a hollow section.

7. Housing (1) according to any of claims 1 to 6, **characterised in that** the frame posts (3) are each composed of at least two plastics extrusion profiles (8, 8') that are arranged in parallel side-by-side.

8. Housing (1) according to any of claims 1 to 7, **characterised in that** at least one resilient sealing profile (13) is extruded onto at least one plastics extrusion profile (8, 8').

9. Housing (1) according to claim 8, **characterised in that** the sealing profile (13) consists of a thermoplastic elastomer, a softened PVC, a polyurethane, or a pure elastomer.

10. Air conditioning unit (2) comprising a housing (1) according to any of claims 1 to 9.


**Revendications**

1. Boîtier (1) isolé thermiquement, en particulier en forme de parallélépipède rectangle, pour un appareil de climatisation (2), comprenant

   - plusieurs montants de cadre (3), qui sont reliés entre eux pour former un cadre de boîtier (4), et
   - plusieurs parois de boîtier (5) isolées thermiquement, encadrées par le cadre de boîtier (4),
   - les montants de cadre (3) étant constitués de profilés extrudés en matière plastique (8, 8') et au moins un profilé extrudé en matière plastique (8, 8') comportant plusieurs inserts d'armature (9, 9'), de préférence coextrudés de manière complètement encapsulée, et

- au moins une couche d'armature (9') étant constituée de métal,

**caractérisé en ce que**

- au moins un autre insert d'armature (9) est constitué d'un produit semi-fini fibres/matrice réalisé sous la forme d'organosheet avec une matrice de matière plastique (10), dans laquelle sont intégrées des fibres de renforcement (11), de préférence continues,

- **en ce que** les parois de boîtier (5) comportent une cloison intérieure et/ou extérieure (6, 6') en aluminium et

- **en ce que** le profilé extrudé en matière plastique (8, 8') armé présente un coefficient de dilatation thermique $\alpha_P = 15 \div 35 \cdot 10^{-6}$ / K.

2. Boîtier (1) selon la revendication 1, **caractérisé en ce que** les fibres de renforcement (11) s'étendent toutes dans le sens d'extrusion.

3. Boîtier (1) selon la revendication 1 ou 2, **caractérisé en ce qu'**au moins un produit semi-fini fibres/matrice (9) en forme de bande, disposé dans la zone intérieure du montant de cadre (3), est prévu.

4. Boîtier (1) selon l'une des revendications 1 à 3, **caractérisé en ce qu'**au moins un insert d'armature (9') en métal, disposé de préférence à proximité immédiate de, et parallèlement à la surface extérieure (B) du boîtier (1), est prévu.

5. Boîtier (1) selon l'une des revendications 1 à 4, **caractérisé en ce que** le profilé extrudé en matière plastique (8, 8') armé présente un coefficient de dilatation thermique $\alpha_P = 20 \div 30 \cdot 10^{-6}$ / K.

6. Boîtier (1) selon l'une des revendications 1 à 5, **caractérisé en ce qu'**au moins un profilé extrudé en matière plastique (8, 8') est réalisé sous la forme d'un profilé creux.

7. Boîtier (1) selon l'une des revendications 1 à 6, **caractérisé en ce que** les montants de cadre (3) sont assemblés respectivement à partir de deux profilés extrudés en matière plastique (8, 8') disposés parallèlement l'un à côté de l'autre.

8. Boîtier (1) selon l'une des revendications 1 à 7, **caractérisé en ce qu'**au moins un profilé d'étanchéité (13) élastique est coextrudé sur au moins un profilé extrudé en matière plastique (8, 8').

9. Boîtier (1) selon la revendication 8, **caractérisé en ce que** le profilé d'étanchéité (13) est constitué d'un élastomère thermoplastique, d'un PVC plastifié, d'un polyuréthane ou d'un élastomère pur.

10. Appareil de climatisation (2) comprenant un boîtier (1) selon l'une des revendications 1 à 9.

Fig. 1

EP 3 211 348 B1

**Fig. 2**

A - A

6'  9'  8  3
B
7
9
5
6
7
8'
6'

**Fig. 2a**

8
14  9'
12
9
13

Fig. 3
A - A

Fig. 3a

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009014319 U1
- EP 2803805 A1
- DE 10033389 A1